# EUROPEAN PATENT APPLICATION

(11) **EP 2 511 861 A1**
(43) Date of publication of application: **17.10.2012**
(21) Application number: 11162461.5
(22) Date of filing: 14.04.2011
(51) Int. Cl.: G06Q 10/00, G06Q 50/00, G06Q 20/00

(54) **Remote signature system**

(71) Applicant: Deutsche Post AG, 53113 Bonn (DE)
(72) Inventor: Garcia Camacho, Javier, 28022 Madrid (ES)
(74) Representative: Jostarndt, Hans-Dieter

(57) **Abstract**

The invention relates to a remote signature system for accepting delivery of items, to a method to operate such a system and to a user device for use in this system to execute this method comprising a requesting device (3), a user device (4) and a control system (5), wherein the requesting device (3) is arranged to send a request (R) comprising delivery information (DI) at least to the user device (4) to request the user to provide a remote signature (RS), wherein the user device (4) is arranged to receive the request (R) from the requesting device (3), to execute (E) an application installed on the user device (4) enabling the user to provide his remote signature (RS) by signing on top of the user device (4) in response to the sent request (R), and to send (S) at least the provided remote signature (RS) to the control system (5), and wherein the control system (5) is arranged to at least receive the remote signature (RS) from the user device (4), to store (ST) the received remote signature (RS) in a data storage unit (51), to execute a verification process (VP) in a verification unit (52) comparing the remote signature (RS) against identification data (ID-5) stored in the data storage unit (51) and to send at least a confirmation message (CM) to the requesting device (3) at least indicating the receipt of the remote signature (RS) and/or the results of the verification process (VP)..

## Description

### Field of the invention

The invention relates to a remote signature system for accepting delivery of items, to a method to operate such a system and to a user device for use in this system to execute this method.

### Background of the invention

Courier services deliver items to customers at the customer's addresses. The executed delivery of the items is typically confirmed by the recipient by signing a certain document or providing an electronic signature on a hand-held device of the deliverer. The courier services often face the problem that the recipient is not at home during delivery. As a result, the deliverer cannot handover the item. The deposition of the item e.g. in front of the door of the recipient without notifying the recipient about the delivery may increase the risk of stolen items. As a consequence either the deliverer has to try to deliver the item again at a later point in time or the deliverer leaves a message to the recipient that the recipient can pick up his item at a pickup office, e.g. a post office. Both procedures are time consuming and enhance the effort during delivery for the deliverer and for the customer resulting in higher delivery costs and a decreased satisfaction of the recipient as the customer of this service. Sometimes the deliverer tries to handover the item to neighbors of the recipient for handing out the item to the customer later by the neighbors. In many cases the neighbors do not accept items for other persons at all or are not willing to confirm such delivery on behalf of the intended recipient.

Document DE 10 2005 033 503 discloses a delivery method, where the delivery is recorded in order to obtain a proof of delivery by taking a picture of the delivered item during inserting it into a receiving box at the recipients address. The stored taken picture is transferred to a storage system of the courier service after the deliverer returned to the courier service office. The customer does not have to be present for this kind of documentation of the executed delivery. However, the delivery of certain items requires a signature from the customer to confirm the receipt of the delivered item, which is not provided in DE 10 2005 033 503.

### Summary of the invention

It is an object of the invention to provide a system for a confirmed delivery of items to the user of this system without the need for users to be present during delivery.

This object is solved by a remote signature system for accepting delivery of items comprising a requesting device, a user device and a control system, wherein the requesting device is arranged to send a request comprising delivery information at least to the user device to request the user to provide a remote signature, wherein the user device is arranged to receive the request from the requesting device, to execute an application installed on the user device enabling the user to provide his remote signature by signing on top of the user device in responds to the sent request, and to send at least the provided remote signature to the control system, and wherein the control system is arranged to at least receive the remote signature from the user device, to store the received remote signature in a data storage unit, to execute a verification process in a verification unit comparing the remote signature against identification data stored in the data storage unit and to send at least a confirmation message to the requesting device at least indicating the receipt of the remote signature and/or the results of the verification process.

In the present invention the remote signature denotes a signature given from a person present at one location to a person present at a second location, where there is a distance between first and second location prohibiting both persons to meet personally in order to get or provide the signature. The user is the person providing his remote signature. The request to provide this remote signature might be initiated the other person operating the requesting device or by an automatic process executed on the requesting device or triggering the requesting device to send out such a request. There is no need for users to be present during delivery to confirm the delivery of items. The confirmation is given by the remote signature. The term remote signature denotes an authorization given by the user. The content of the remote signature could be different for different embodiments. The remote signature could be a manually executed signature or any other characteristic feature suitable to identify the user, e,g. his fingerprint or a specific code.

As an example of a field of use of the present invention a deliverer of a courier service may try to deliver an item to a recipient at his home address. The recipient is the user according to the present invention and the deliverer operates the requesting device. When the recipient is not present at home to accept the delivery personally the present invention enables the deliverer to request the recipient to confirm the received delivery from a remote location by providing his remote signature. The delivered item might be any kind of objects mailed by a postal company. The courier service might be a postal company of a subcontractor of such postal company, e.g. DHL.

As another example of a field of use of the present invention, the remote signature system might be used by companies or government in order to sign documents, e.g. in case of received documents with lacking signature. In this case the missing signature can be provided on request as remote signature from the remote location of the user as the person, which is obliged to sign the document. To accept the delivery, the recipient of the document (e.g. a company or a government) requests the user as the sender of the document to provide a remote signature. In this application the item is the document which should be signed.

In general any company or service visiting a customer at home could use the remote signature system to provide a remote signature. As another example the system according to the present invention is also applicable to internet and phone service providers, gas, water, electricity companies, etc.

The confirmation message may comprise a confirmation that the user gave his signature or may comprise the remote signature as a data file.

There is a wide range of fields of use of the present invention, which extend in principal to any process, where a signature is required and the person obliged to sign is not available personally.

The request send out by the requesting device may have any format or content suitable to start the application installed on the user device. The request may comprise any trigger signal or trigger code, which triggers the user device to start the application. As an example, the request may by be send out according to the machine-to-machine technology (M2M), which allows both wireless and wired systems to communicate with other devices of the same ability. M2M uses a device (such as the user device) to capture an event (the received request), which is relayed through a network (wireless, wired or hybrid) to the application, that translates the captured event into meaningful information, here the start command for the application. As an example, SMS messages comprising a sequence of characters representing such control command may be used as M2M communication tool to send the request to the user device and to start the application.

The format of the recorded remote signature can be any format suitable to be recorded (stored) and transmitted via a data connection. Therefore the format should not lead to file sizes of the recorded signature making it difficult to transmit the remote signature as a data file to another receiving unit, e.g. the receiving unit of the control system. The data transfer speed to transmit at least the remote signature depends on the properties of the user device and the available data connection to the control system. This connection might be provided by a data network such as a mobile phone network or the internet, wide area networks (WAN) or local area networks (LAN) as a computer network that connects computers and devices in a wide or limited geographical area such as home, school, computer laboratory or office building providing high data-transfer rates, smaller geographic area, and lack of a need for leased telecommunication lines. Network protocols including TCP/IP deliver transport and addressing functions might be applied to at least transmit the remote signature. Protocols including Packet over SONET/SDH, MPLS, ATM and Frame relay are often used by service providers to deliver the links that are used in WANs. Suitable data formats are the commonly used HTML- or PDF-format. People skilled in the art may use other suitable formats within the scope of the present invention.

Delivery information denotes any information related to the delivery of the items such as names and/or addresses (post codes) of recipient and/or sender, air Waybill numbers (AWB) comprising a barcode in order to trace the item, properties of the item (size, weight), number of items, coded information such as machine readable codes (e.g. barcodes, RFID-tags), information related to the people or systems sent the request, e.g. the courier service or the requesting company, geographic coordinates (e.g. according to a satellite positioning system), time and date information. People skilled in the art may consider other or additional delivery information within the scope of this invention.

The user device can be any suitable device to receive the request, to store and execute the application and to enable the user to provide the signature, to be able to record this signature and to send-out the data file comprising the signature. As an example, the user device might be a mobile phone such as a smart phone having an internet network access suitable to run Android, iOS, Symbian, RIM, WP7. Android is an open-source software stack for mobile devices that includes an operating system, middleware and key applications. Android's mobile operating system is based upon a modified version of the Linux kernel. The smart phone might be connected to a WiFi home-network or it depends on ISP providing an internet service and a suitable bandwidth range for data transfer (GPRS: 56 Kbit/s, EDGE: 236.8 Kbit/s, UNMTS: 384 Kbit/s, HSDPA: 14400 Kbit/s - 14.4 Mbit/s).

In an embodiment the user device comprises a touch screen suitable e.g to record the signature written manually on top of the touch screen, to record a fingerprint of the user touch the screen with one of his fingers or to record an inserted code. A touch screen generally refers to a display, which can be operated by touching the surface of the display with a finger or a pen. Touch screens can be operated by resistive, capacitive or surface acoustic wave technology. The size of the touch screen should be large enough to be able to provide a signature by hand, e.g. with areas of a few centimeters in each direction of the screen surface.

The application is a suitable software program to enable the user to provide his signature on the touch screen of the user device, e.g. an Adroid application. The application is stored in a storage unit of the user device and installed to the user device in order to be executable by a processor of the user device resulting in suitably displayed advices the user within the touch screen. The user may install the application by downloading the application from a source of a data network or from the control system. The download may be executed via the connection of the user device to the data network and/or to the control system. Alternatively, the application might be loaded into the user device from a data storage unit connected to the user device via an interface of the user device. The external data storage unit might be a computer stick. In an embodiment the application installed on the user device provides a signing area for executing and recording the signature and at least one shipment information area for displaying one or more of the delivery information. The signing area and the information area preferably are adapted to the required size. The signing area displayed on the touch screen may have a size of a few square centimeters, e.g. of 3 x 5 cm². The size of the information area depends on the amount of information to be displayed to the user. The application may provide more than one information areas, e.g. a first information area shows information about the requesting site or company and a second information are shown information about the item. The first and/or second information areas may further comprise scrolling tabs in order to read all the available information in case of receive more than one item having different AWBs. By scrolling from one AWB to the next AWBs the user can read the information about each AWB.

In another embodiment the application further at least provides a confirmation button and/or send button on the touch screen for sending the remote signature to the control system in response of pressing at least one of the buttons. The buttons are areas of the touch screen executing a process in response of touching these areas (buttons). The buttons may be designed in a suitable way to indicate the executed processes when touching the buttons. As an example, the buttons are highlighted areas comprising the words "send", "accept", "cancel" or "confirm".

In another embodiment the application is arranged to request the user to insert at least one of the identification data into the user device for being sent to the control system together with the remote signature. Suitable inserting means of the user device are keyboards, array of buttons, a virtual keyboard displayed on the touch screen or by a voice recognition system. The inserted identification data may be used by the control system to assign the received remote signature to a user registered in the user database of the control system. In another application, the remote signature is already assigned to the corresponding user by the mobile phone number or by the IP-address of the user device sending the remote signature to the control system. In such cases, the inserted identification data might be used to further improve the verification process for the provided remote signature executed by the control system.

The requesting device can be any suitable device to at least send the request to the user device. Therefore the requesting device should be connected to a mobile network or a data network, where also the user device has access to. The required access data for the user device might be provided by the user to the control system via a registration process, where such data are inserted by the user. The access data are transferred to the requesting device in response to a planned delivery an item to be delivered to the user. The requesting device may apply the same or different data connection techniques as the user device. In order to be able to send the request to the user, either the user access data (e.g. telephone number or IP-address) is stored in a storage unit of the requesting device or the requesting device is connected to the control system providing the user access information to the requesting device. The connection to the control system might be established in the same way as the data connections used for the communication between the user device and the control system. As an example, the requesting device is a mobile phone such as a smart phone. In another example, the requesting device is a mobile capturing device as commonly used by postmen with added functionality in order to be able to be connected to a data network or to a mobile network and to be able to at least send a request via such networks, preferably to be able to receive confirmation messages from the control system via such networks.

In an embodiment the requesting device is a hand-held device comprising a camera suitable to take a picture of at least parts the delivered item and/or a reading unit suitable to read machine-readable information applied to the delivered item or data stored in the requesting device, which are linked to the item. Small cameras are known from mobile phones and can be applied also within the requesting device. Such cameras are able to take pictures easily at any location. As an example, the deliverer of an item takes a picture of the item being at the home address of the recipient to document the delivery of the item. In other cases the picture may comprise any delivery information present on the item in case of not being able to record such information in a different way, e.g. with a suitable reading unit. An example of a suitable reading unit is a barcode scanner, RFID reader or an OCR scanner. The pictures might be assigned to geographic data in case of a requesting device comprising a satellite navigation module in order to provide a geo-tracked picture.

In another embodiment the requesting device is arranged to attach at least one of the taken pictures and/or the read machine-readable information and/or the data linked to the item as the delivery information to the request sent out to the user device. As an example, machine readable information might be applied as barcodes or RFID tags to items. The attachment of the taken pictures might be used to provide evidence to the user that the item is indeed delivered to his home address or to provide additional delivery data in order to help the user to recognize the item to be delivered to him. The taken pictures might be assigned to geographic coordinates taken from a satellite navigation module of the requesting device and assigned to or copied into the taken pictures. The geographic data might be replaced by the corresponding geographic address, if available for the corresponding coordinates.

In another embodiment the requesting device is arranged to send a notification to the control system simultaneously to the sent request notifying the control system that a request is sent to the user device to provide a remote signature. This has the advantage that the remote signature system is able to recognize if the request is sent and the remote signature is not received due to a missing user action. In this case the control unit may advise the requesting device to proceed in an alternative way to deliver the item. In another embodiment the requesting device comprises a display element for displaying at least the confirmation message, preferably suitable to display the authorizations given to other persons to receive the item and/or the remote signature of the user. If there is no provided remote signature, the user may prefer a delivery to an alternative delivery addresses instead of returning the item and therefore has authorized such address (or persons) via the control system. Such alternative delivery addresses, e.g. neighbors, are authorized by the user and the deliverer itself is subsequently authorized to leave the item there. Furthermore with the confirmation message or with the authorization displayed on the display of the requesting device, it is easier for the deliverer to convince a neighbor to accept an item on behalf of the user as the indented recipient. Also in case of no authorized alternative delivery address, the neighbor might be asked to receive the delivery on behalf of the indented user. Here the user may provide his remote signature authorizing the neighbor as the person allowed to receive the delivery on behalf of the user. In case of no received remote signature from the user the neighbor might be asked by the deliverer to provide a proof that he indeed received the delivery on behalf. Such proof may be provided by taking a picture with the requesting device, preferably additionally assigned with geographic coordinates, showing the neighbor with the delivery. The control system according to the present invention manages the communication between the user device and the requesting device at least after providing the remote signature by the user. The control system could be a computer system comprising at least one data storage unit and a processor to execute process steps. The data storage unit might be a database, e.g. an Oracle XE, HTMLDB, SQL server database. The control system further comprises receiving and sending means suitable to establish a data connection to the user device and requesting device. The data connection can be established as described previously.

In another embodiment the control system is additionally arranged to provide a web portal with a user interface enabling the user to execute a registration process comprising inserting access data and identification data suitable for identifying and accessing the user and providing the application to the user for being installed on the user device as part of the executed registration process. The registration process might be also completed in an Adroid, iOS or any other application. In one embodiment the application can only be downloaded from the control system, e.g. from the web portal, if the user provides personal information and the information described above. After that the user can be identified and accessed by the control system and the requesting device. The accessing and identification data could also be provided via an alternative process, e.g. by sending a paper letter comprising such information to the control system. In response of the received access data and identification data, the control system releases the download of the application to the user. In an alternative embodiment the application can be downloaded from the web portal before executing the registration process. During the installation process of the application on the user device, the user has to execute the registration process comprising inserting the access data and identification data.

In order to provide evidence that the received signature is indeed from the intended user, the control system comprises a verification unit, e.g. a processor. The verification unit executes a suitable program to compare the provided signature and/or identification data with identification data present within the control system. In another embodiment the data storage unit of the control system comprises at least one element of the group of a user master signature, user identification code, user phone number in case of the user device being a mobile phone, user password, or authorizations given to other persons to receive the item as the identification data stored in the data storage unit, and that the verification unit is suitable to compare at least one of identification data sent together with the remote signature with the identification data stored in the data storage unit.

The confirmation message is sent to the requesting device by the control system, where the confirmation message indicates the receipt of the remote signature, if the user provided the remote signature to the control system. In case of not receiving the remote signature, the verification process recognizes no present remote signature. This result of the verification process leads to a corresponding confirmation message to the requesting device, where eventually present authorizations stored as identification data in the storage unit are part of the conformation message. In any case, the control system may add additional information to the confirmation message. In an embodiment the control system is arranged to send the confirmation message comprising the authorizations given to other persons to receive the item to the requesting device as response of not receiving the remote signature from the user device within a response time interval. Such time interval could vary from a few minutes to longer periods depending on the field of application of the remote signature system. The confirmation message is required to inform the requesting device about the current status of the remote signature process even in case of a control system not receiving any remote signature from the user device.

In another embodiment the requesting device is equipped with a satellite navigation module suitable to detect or determine the geographic position of the requesting device, e.g. with a GPS module. The requesting device may also comprise a navigation module determining the distance between the current position and the position of the addresses of recipients of items. The addresses of recipients to be visited during the delivery route might be stored in the data storage unit of the requesting device. In case of approaching the next recipient where the distance is below a certain threshold distance, the requesting device sends a delivery notification to the recipient as the user, that the deliverer will reach the recipients address soon, e.g. within the next 20 minutes or 10 minutes. The user may use the sent delivery notification to either return to his delivery address or may prepare for providing a remote signature. The delivery notification acts as a pre-alert to the user that courier is going to deliver. The navigation module may provide geographic coordinates, which might be assigned to picture during delivery at the recipients address proving without any doubt that deliverer has delivered the shipment as a geo-tracked picture.

In another embodiment, the executed delivery can be documented by the requesting device by taking a picture of the machine readable information of the item and/or reading the machine readable information with the requesting device and simultaneously recording the geographic location, where the picture is taken and/or the machine readable information is read. The data are stored in the requesting device and transferred to the control system for archiving the delivery data in the database. Alternatively, also the person who receives the item on behalf of the intended recipient may sign a confirmation document.

The invention further relates to a method to operate a remote signature system for accepting delivery of items according to the present invention comprising a requesting device, a user device and a control system, wherein the method comprises the following steps:
- sending a request comprising delivery information at least to the user device to request the user to provide a remote signature by the requesting device,
- receiving the request from the requesting device by the user device,
- executing an application installed on the user device enabling the user to provide his remote signature by signing on top of the user device in response to the sent request,
- sending the provided remote signature to the control system,
- receiving at least the remote signature from the user device by the control system,
- storing the received remote signature in a data storage unit of the control system,
- executing a verification process in a verification unit of the control system comparing the remote signature against identification data stored in the data storage unit
- sending a confirmation message to the requesting device by the control system at least indicating the receipt of the remote signature and the results of the verification process.

In an embodiment the method comprises at least one of the following additional steps
- executing a registration process via a web portal with a user interface, where the user inserts identification data suitable for identifying the user and providing the application to the user for being installed on the user device in response to the executed registration process,
- recording the signature of the user via a touch screen of the user device, preferably also requesting the user to insert at least one of the identification data into the user device for being sent to the control system together with the remote signature,
- pressing a confirmation button or a send-button provided on the touch screen by the application to send the remote signature to the control system,
- comparing at least one of the identification data sent together with the remote signature with the identification data stored in the data storage unit by a verification unit of the control system, wherein the stored identification data comprises at least one element of the group of a user master signature, user identification code, user phone number in case of the user device being a mobile phone, user password, or authorizations given to other persons,
- sending a notification by the requesting device to the control system simultaneously to the sent request notifying the control system, that a request is sent to the user device to provide a remote signature,
- sending the confirmation message comprising the authorizations given to other persons to receive the item to the requesting device as response of not receiving the remote signature from the user device within a response time interval by the control system,
- attaching at least one taken pictures and/or read machine-readable information and/or data linked to the item as delivery information to the request sent out to the user device by the requesting device, wherein the requesting device is a hand-held device comprising a camera suitable to take the picture of at least parts the delivered item and/or a reading unit suitable to read the machine-readable information applied to the delivered item or data stored in the requesting device, which are linked to the item,
- displaying the confirmation message on a display element of the requesting device, preferably suitable to display the authorizations given to other persons to receive the item and/or the remote signature of the user.

The above listed method steps might be realized in different embodiments applying one or more steps in different combinations. As an example one embodiment of the method may comprise the additional steps 1, 3 and 5. A different embodiment of the method may comprise the additional steps 7 and 8. People skilled in the art are able to select other combinations of the previously listed method steps within the scope of the present invention.

The invention further relates to a user device suitable to be used in a remote signature system according to the present invention for executing the method according to the present invention, wherein the user device comprises a touch screen suitable to record the signature written manually on top of the touch screen and an application installed on the user device, wherein the application provides a signing area for executing and recording the signature and at least one shipment information area for displaying one or more of the delivery information on the touch screen, preferably the application further provides a confirmation button and/or send button on the touch screen for sending the remote signature to the control system in response of pressing at least one of the buttons, more preferably the application is arranged to request the user to insert at least one of the identification data into the user device for being sent to the control system together with the remote signature.

### Brief description of the drawings

These and other aspects of the invention will be apparent from and elucidated with reference to the embodiments described hereinafter.
- Fig.1:: shows an embodiment of the remote signature system according to the present invention.
- Fig.2:: shows an embodiment of the user device according to the present invention.
- Fig.3:: shows an embodiment of the method according to the present invention.

### Detailed description of embodiments

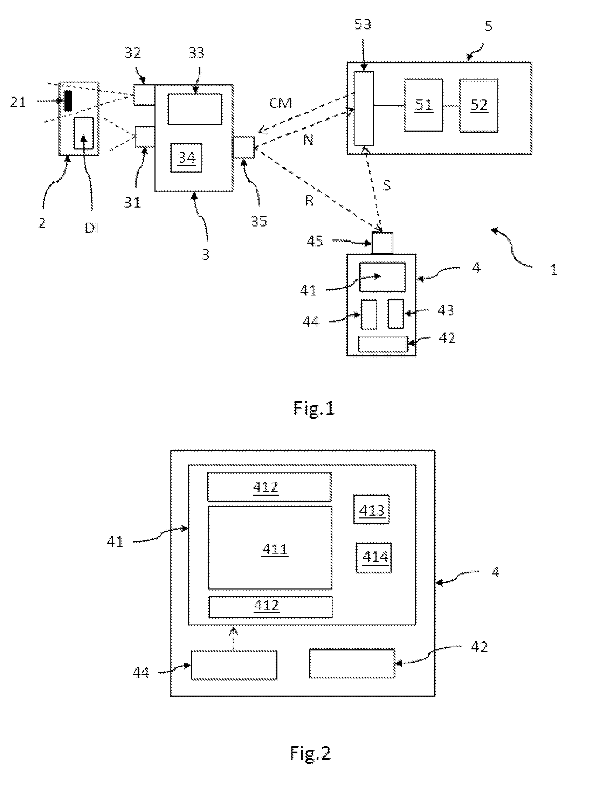

Figure 1 shows an embodiment of the remote signature system 1 according to the present invention comprising a requesting device 3, a user device 4 and a control system 5. The requesting device 3 is arranged to send a request R comprising delivery information DI with the receiving / sending unit 35 to the user device 4 to request the user to provide a remote signature RS. The requesting device 3 furthermore sends a notification N to the control system 5 simultaneously to the sent request R notifying the control system 5 that a request R is sent to the user device 4 to provide a remote signature RS.

In this embodiment the requesting device 3 is a hand-held device comprising a camera 31 to take a picture of at least parts the delivered item 2 and a reading unit 32 to read a barcode or an RFID tag as machine-readable information 21 present on the delivered item 2. In order to supply the additional information obtained by the camera 31 and the reading unit 32 the requesting device 3 attaches the taken pictures and/or the read machine-readable information 21 (and/or the data linked to the item 2) as the delivery information DI to the request R sent out to the user device 4. Furthermore the requesting device 3 comprises a display element 33 for displaying at least the confirmation message CM received from the control system 5. Preferably, authorizations given to other persons to receive the item 2 and/or the remote signature RS of the user are displayed on the display element 33 additionally.

The user device 4 receives the request from the requesting device 3 via the receiving / sending unit 45 of the user device 4. In response to the received request R, an application stored in the storage unit 43 and installed on the user device 4 is executed E by the processor 44 enabling the user to provide his remote signature RS by signing on top of the user device 4. The user device 4 comprises a touch screen 41 suitable to record the signature RS written manually on top of the touch screen 41. The user device 4 further comprise inserting means 42 in order to insert data into the user device, e.g. on request of the executed application. The inserted data can be any kind of data, e.g. identification data ID-4. After having provided the remote signature RS it is sent S to the control system 5.

The control system 5 receives the remote signature RS from the user device 4 with the receiving / sending unit 53. The received remote signature RS is stored ST in the data storage unit 51. Furthermore a verification process VP is executed in a verification unit 52 comparing the remote signature RS against identification data ID-5 stored in the data storage unit 51. After the verification process VP is finished, the verification results are send as a confirmation message CM to the requesting device 3 at least indicating the receipt of the remote signature RS and/or providing the results of the verification process VP. Fig.2 shows an embodiment of the user device 4 according to the present invention. The application executed by the processor 44 of the user device 4 provides a signing area 411 within the touch screen 41 for executing and recording the signature RS (e.g. manual signature, fingerprint or other signatures) and two shipment information areas 412 for displaying the delivery information DI received together with the request R from the requesting device 3. The application further provides a confirmation button 413 and a send button 414 on the touch screen 41 for confirming and sending the remote signature RS to the control system 5 in response of pressing the send buttons 414. The application is additionally arranged to request the user to insert at least one of the identification data ID into the user device 4 via the inserting means 42 for being sent to the control system 5 together with the remote signature RS. The remote signature might be written onto the touch screen 41 by hand or by a suitable pen. After finishing the signature, the user presses the confirmation button 413 in order to save the remote signature RS. Subsequently the user can send the remote signature RS to the control system 5 by pressing the send button 414.

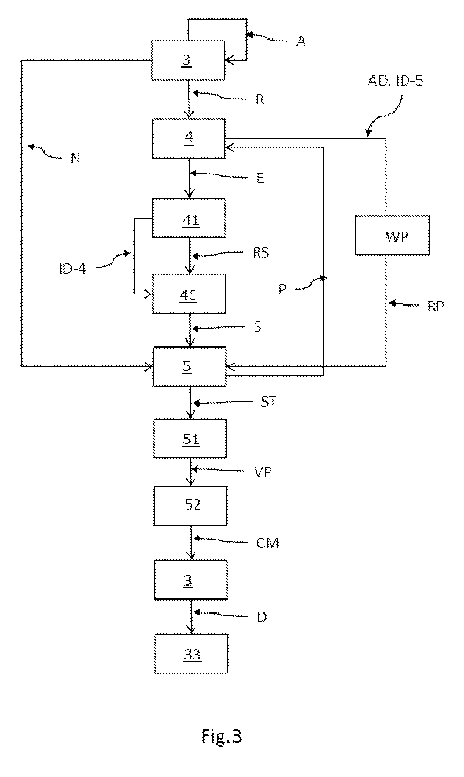

Fig.3 shows an embodiment of the method according to the present invention. To be able to participate to the remote signature system 1 the user has (a) first to execute a registration process RP via a web portal WP with a user interface, where the user inserts access data AD and identification data ID suitable for accessing and identifying the user followed by providing P the application to the user for being installed on the user device 4 in response to the executed registration process RP, or (b) providing P the application to the user device 4 first followed by an installation of the application on the user device 4, where the installation leads to a registration process RP, where the user inserts access data AD and identification data ID. Data to be inserted by the user during the registration process RP may concern one or more data regarding name, surname, birthday, ID-number, password, nickname, telephone number (mobile number), IP-address, signature, alternative ways of delivery etc. Both alternatives are covered by the present invention. After completing the installation process of the application on the user device 4, the user device 4 is ready to participate to the remote signature system 1. In case of requiring a signature from the user of the user device 4, the following steps are executed:
(I) sending a request R comprising delivery information DI at least to the user device 4 to request the user to provide a remote signature RS by the requesting device 3. In case of additional available information, at least one taken picture and/or read machine-readable information and/or data linked to the item 2 might be attached A as delivery information DI to the request R, if the requesting device 3 comprises a suitable camera 31 to take the picture of at least parts the delivered item 2 and/or a suitable reading unit 32 to read the machine-readable information 21 applied to the delivered item 2. Additionally data stored in the requesting device 3 linked to the item 2 might be attached A to the request R as well. The attachment process might be executed as known from attaching data filed to common SMS, e-mail communication;
(II) receiving the request R from the requesting device 3 by receiving/sending unit 45 the user device 4 und subsequently executing E an application installed on the user device 4 enabling the user to provide his remote signature RS by signing on top of the user device 4 in response to the sent request R (e.g. via control signals or control commands according to the machine-to-machine communication technology) and displaying attached delivery information DI on the touch screen 41.;
(III) recording the remote signature RS of the user via a touch screen 41 of the user device 4, eventually also requesting the user to insert at least one of the identification data ID-4 into the user device 4 for being sent to the control system 5 together with the remote signature RS followed by pressing a confirmation button 413 and subsequently a send button 414 on the touch screen 41;
(IV) sending S the remote signature RS via the receiving / sending unit 45 to the control system 5;
(V) in parallel to the steps II - IV, the requesting device 3 sends a notification N to the control system 5 notifying the control system 5, that a request R is sent to the user device 4 to provide a remote signature RS in order to trigger the control system 5 to wait for a message from the user device 4. The notification N might be an SMS message comprising a suitable sequence of characters as a command code being interpreted by the control device according to the M2M technology also triggering a certain time interval during which the receipt of the remote signature is expected from the user device. Alternatively the notification might by a java message or a push message like Whatsapp;
(VI) receiving at least the remote signature RS from the user device 4 by the receiving / sending unit 53 of the control system 5 and storing ST the received remote signature RS and the eventually added identification data ID-4 inserted by the user device 4 in a data storage unit 51 of the control system 5 connected to the receiving / sending unit 45 and/or to a processor of the control system 5:
(VII) executing a verification process VP in a verification unit 52 of the control system 5 comparing the remote signature RS and/or the identification data ID-4 against identification data ID-5 according to the registration process RP stored in the data storage unit 51;
(VIII) sending a confirmation message CM to the requesting device 3 by the receiving / sending unit 53 of the control system 5 at least indicating the receipt of the remote signature RS and the results of the verification process VP. The confirmation message CM may comprise authorizations given by the user to other persons to receive the item 2 during the registration process (or later by updating the inserted data AD, ID-5 as response of not receiving the remote signature RS from the user device 4 within a response time interval by the control system 5; and
(IX) displaying D the confirmation message CM on the display element 33 of the requesting device 3, where the display element 33 is suitable to display the authorizations given to other persons to receive the item 2 and/or the remote signature RS of the user.

In another embodiment of the present invention, the user as the recipient is also able to sign the delivery of an item 2 with the user device 4 comprising a camera, if the user is at home and personally receives the item 2. Here the application according to the present invention installed on the user device 4 is started. The user takes a picture of the machine-readable information (e.g. a barcode representing the AWB-number of the item 2) applied to the item 2. The application installed on the user device reads the barcode and sends it directly to the control system 5, where the signature of the user present in the database 51 will be linked to the received AWB-number (or any other machine-readable information suitable to identify the item and the corresponding user to receive the item) and the verification process provides the confirmation of a completed delivery as the result. This confirmation might be send as a confirmation message CM to the requesting device 3 to finish the delivery process.

The present invention might be also applied separate from delivering items to receiving person. The remote signature system might also be used to confirm the presence of a person at a certain location by providing pictures assigned with geographic coordinates to a user at a remote location enabling this user to reply to such confirmation with providing his remote signature. This system might be used to authorize third parties from a remote location to execute payments or any other tasks requiring a authorization of the user.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

### LIST OF NUMERALS

- 1: remote signature system
- 2: item to be delivered
- 21: machine-readable information
- 3: requesting device
- 31: camera
- 32: reading unit
- 33: display element
- 34: storage unit of the requesting device
- 35: receiving / sending unit of the requesting device
- 4: user device
- 41: touch screen
- 411: signing area
- 412: shipment information area
- 413: confirmation button
- 414: send button
- 42: inserting means
- 43: storage unit of the user device
- 44: processor of the user device to execute the installed application
- 45: receiving / sending unit of the user device
- 5: control system
- 51: data storage unit
- 52: verification unit
- 53: receiving / sending unit of the control system
- A: attaching additional information to the request
- AD: access data
- CM: confirmation message
- D: displaying the confirmation message on the display element
- DI: delivery information
- E: executing the application installed on the user device
- ID-4: identification data inserted into the user device
- ID-5: identification data stored in the control system
- N: notification sent from the requesting device to the control system
- P: providing the application
- R: request to provide a remote signature
- RP: registration process
- RS: remote signature
- S: sending the remote signature to the control system
- ST: storing the remote signature in the control system
- VP: verification process
- WP: web portal provided by the control system

## Claims

1. A remote signature system (1) for accepting delivery of items (2) comprising a requesting device (3), a user device (4) and a control system (5), wherein the requesting device (3) is arranged to send a request (R) comprising delivery information (DI) at least to the user device (4) to request the user to provide a remote signature (RS), wherein the user device (4) is arranged to receive the request (R) from the requesting device (3), to execute (E) an application installed on the user device (4) enabling the user to provide his remote signature (RS) by signing on top of the user device (4) in response to the sent request (R), and to send (S) at least the provided remote signature (RS) to the control system (5), and wherein the control system (5) is arranged to at least receive the remote signature (RS) from the user device (4), to store (ST) the received remote signature (RS) in a data storage unit (51), to execute a verification process (VP) in a verification unit (52) comparing the remote signature (RS) against identification data (ID-5) stored in the data storage unit (51) and to send at least a confirmation message (CM) to the requesting device (3) at least indicating the receipt of the remote signature (RS) and/or the results of the verification process (VP).

2. The remote signature system (1) according to claim 1,
**characterized in that**,
the control system (2) is arranged to provide a web portal (WP) with a user interface enabling the user to execute a registration process (RP) comprising inserting access data (AD) and identification data (ID-5) suitable for accessing and identifying the user and providing (P) the application to the user for being installed on the user device (4) as part of the executed registration process (RP).

3. The remote signature system (1) according to claim 1 or 2,
**characterized in that**,
the user device (4) comprises a touch screen (41) suitable to record the signature (RS) written manually on top of the touch screen (41).

4. The remote signature system according to claim 3,
**characterized in that**,
the application installed on the user device (4) provides a signing area (411) for executing and recording the signature (RS) and at least one shipment information area (412) for displaying one or more of the delivery information (DI).

5. The remote signature system (1) according to claim 4,
**characterized in that**,
the application further provides at least a confirmation button (413) and/or send button (414) on the touch screen (41) for sending the remote signature (RS) to the control system (5) in response of pressing at least one of the buttons (413, 414).

6. The remote signature system (1) according to claim 4 or 5,
**characterized in that**,
the application is arranged to request the user to insert at least one of the identification data (ID) into the user device (4) for being sent to the control system (5) together with the remote signature (RS).

7. The remote signature system (1) according to claim 6,
**characterized in that**,
the data storage unit (51) of the control system (5) comprises at least one element of the group of a user master signature, user identification code, user phone number in case of the user device being a mobile phone, user password, or authorizations given to other persons to receive the item (2) as the identification data (ID-5) stored in the data storage unit (51), and that the verification unit (52) is suitable to compare at least one of identification data (ID-4) sent together with the remote signature (RS) with the identification data (ID-5) stored in the data storage unit (51).

8. The remote signature system (1) according to claim 7,
**characterized in that**,
the requesting device (3) is arranged to send a notification (N) to the control system (5) simultaneously to the sent request (R) notifying the control system (5) that a request (R) is sent to the user device (4) to provide a remote signature (RS).

9. The remote signature system (1) according to claim 8,
**characterized in that**,
the control system (5) is arranged to send the confirmation message (CM) comprising the authorizations given to other persons to receive the item (2) to the requesting device (3) as response of not receiving the remote signature (RS) from the user device (4) within a response time interval.

10. The remote signature system (1) according to any of the preceding claims,
**characterized in that**,
the requesting device (3) is a hand-held device comprising a camera (31) suitable to take a picture of at least parts the delivered item (2) and/or a reading unit (32) suitable to read machine-readable (21) information applied to the delivered item (2) or data stored in the requesting device (3), which are linked to the item (2).

11. The remote signature system (1) according to claim 10,
**characterized in that**,
the requesting device (3) is arranged to attach at least one of the taken pictures and/or the read machine-readable information and/or the data linked to the item (2) as the delivery information (DI) to the request (R) sent out to the user device (4).

12. The remote signature system (1) according to any of the preceding claims,
**characterized in that**,
the requesting device (3) comprises a display element (33) for displaying at least the confirmation message (CM), preferably suitable to display the authorizations given to other persons to receive the item (2) and/or the remote signature (RS) of the user.

13. A method to operate a remote signature system (1) for accepting delivery of items (2) according to claim 1 comprising a requesting device (3), a user device (3) and a control system (4), wherein the method comprises the following steps:
- sending a request (R) comprising delivery information (DI) at least to the user device (4) to request the user to provide a remote signature (RS) by the requesting device (3),
- receiving the request (R) from the requesting device (3) by the user device (4),
- executing (E) an application installed on the user device (4) enabling the user to provide his remote signature (RS) by signing on top of the user device (4) in responds to the sent request (R),
- sending (S) the provided remote signature (RS) to the control system (5),
- receiving at least the remote signature (RS) from the user device (4) by the control system (5),
- storing (ST) the received remote signature (RS) in a data storage unit (51) of the control system (5),
- executing a verification process (VP) in a verification unit (52) of the control system (5) comparing the remote signature (RS) against identification data (ID-5) stored in the data storage unit (51),
- sending a confirmation message (CM) to the requesting device (3) by the control system (5) at least indicating the receipt of the remote signature (RS) and the results of the verification process (VP).

14. The method according to claim 13,
**characterized in that**,
the method comprises at least one of the following steps
- executing a registration process (RP) via a web portal (WP) with a user interface, where the user inserts access data (AD) and identification data (ID) suitable for accessing and identifying the user and providing (P) the application to the user for being installed on the user device (4) in response to the executed registration process (RP),
- recording the signature (RS) of the user via a touch screen (41) of the user device (4), preferably also requesting the user to insert at least one of the identification data (ID-4) into the user device (4) for being sent to the control system (5) together with the remote signature (RS),
- pressing a confirmation button (413) or a send button (414) provided on the touch screen (41) by the application to send the remote signature (RS) to the control system (5),
- comparing at least one of the identification data (ID-4) sent together with the remote signature (RS) with the identification data (ID-5) stored in the data storage unit (51) by a verification unit (52) of the control system in a verification process (VP), wherein the stored identification data (ID-5) comprises at least one element of the group of a user master signature, user identification code, user phone number in case of the user device being a mobile phone, user password, or authorizations given to other persons to receive the item (2),
- sending a notification (N) by the requesting device (3) to the control system (5) simultaneously to the sent request (R) notifying the control system (5), that a request (R) is sent to the user device (4) to provide a remote signature (RS),
- sending the confirmation message (CM) comprising the authorizations given to other persons to receive the item (2) to the requesting device (3) as response of not receiving the remote signature (RS) from the user device (4) within a response time interval by the control system (5),
- attaching (A) at least one taken picture and/or read machine-readable information and/or data linked to the item (2) as delivery information (DI) to the request (R) sent out to the user device (4) by the requesting device (3), wherein the requesting device (3) is a hand-held device comprising a camera (31) suitable to take the picture of at least parts the delivered item (2) and/or a reading unit (32) suitable to read the machine-readable information (21) applied to the delivered item (2) or data stored in the requesting device (3), which are linked to the item (2),
- displaying (D) the confirmation message (CM) on a display element (33) of the requesting device (3), preferably suitable to display the authorizations given to other persons to receive the item (2) and/or the remote signature (RS) of the user.

15. A user device (4) suitable to be used in a remote signature system (1) according to claim 1 for executing the method according to claim 13, wherein the user device (4) comprises a touch screen (41) suitable to record the signature (RS) written manually on top of the touch screen (41) and an application installed on the user device (4), wherein the application provides a signing area (411) for executing and recording the signature (RS) and at least one shipment information area (412) for displaying one or more of the delivery information (DI) on the touch screen (41), preferably the application further provides a confirmation button (413) and/or send button (414) on the touch screen (41) for sending the remote signature (RS) to the control system (5) in response of pressing at least one of the buttons (413, 414), more preferably the application is arranged to request the user to insert at least one of the identification data (ID-4) into the user device (4) for being sent (S) to the control system (5) together with the remote signature (RS).
